# EUROPEAN PATENT SPECIFICATION

(11) **EP 1 745 385 B1**
(45) Date of publication and mention of the grant of the patent: **13.02.2008**
(21) Application number: 05736456.4
(22) Date of filing: 27.04.2005
(51) Int. Cl.: G06F 13/40, H04L 12/24

(54) **ASSOCIATION OF NODES CONNECTED TO A BUS SYSTEM**
ASSOZIATION VON MIT EINEM BUSSYSTEM VERBUNDENEN KNOTEN
ASSOCIATION DE NOEUDS CONNECTES A UN SYSTEME DE BUS

(30) Priority: 28.04.2004 SE 0401091
(43) Date of publication of application: 24.01.2007
(73) Proprietor: CAPI2 AB, 184 92 Åkersberga (SE)
(72) Inventor: LINNMAN, Sven, S-184 92 Akersberga (SE)
(74) Representative: Stenborg, Anders Vilhelm
(86) International application number: PCT/SE2005/000606
(87) International publication number: WO 2005/106688

(56) References cited:
- EP-A1- 0 601 467
- EP-A2- 1 289 190
- DE-A1- 10 150 499
- DE-U1- 20 114 628
- US-A- 4 373 181
- US-A- 5 519 878
- US-A- 5 675 830
- US-A- 6 098 116

## Description

### TECHNICAL FIELD

The present invention relates in general to methods and devices related to bus systems, and in particular to configuration of bus systems.

### BACKGROUND

Data bus systems, such as filed bus systems, are systems intended for enabling an easy communication between a number of nodes connected to a data bus. Typically, different messages are sent on the bus system, normally between a central unit and a number of nodes or vice versa. Since the messages are available to all nodes connected to the bus, particular nodes are identified by different addresses or identification numbers, here called identities. A message to a certain node is therefore provided with information representing the identity of the intended node for the message. The different nodes can thereby identify which messages are intended for that particular node and allows for neglecting other irrelevant messages.

A first type of node may comprise one or several buttons or switches, intended for control of different functions in the system. This is an example of a node providing "input" signals, in the present disclosure denoted an input node.

Another type of node may be directly connected to a load, e.g. a bulb or a motor. The node typically controls a current in the load according to messages received by the data bus. This is an example of a node providing "output" signals, in the present disclosure denoted an output node.

In a typical scenario, one of the loads shall be controlled by the connected output node when the state of an input node is changed. For instance, a motor connected to an output node should start or stop, or a bulb connected to an output node should be lit or switched off, when a button of one of the input nodes is pushed.

Field bus systems are today very common in small relatively simple control systems, e.g. in consumer products, cars, pleasure-boats etc. A relatively general operation can be arranged for by relatively simple means.

When a system of several input and output nodes is built, the system and nodes have to be taught about how to configure the system. As mentioned above, the nodes are typically given different identities. A first configuration task is therefore to determine which nodes should have which identities. Typically, an identity of a sender or receiver node is registered in a central unit in connection with a physical connection to the data bus. Sometimes, the nodes may have a number of internal switches that can be set into different positions and thereby define different identities. The nodes may also have different unique identities programmed from the manufacturer. Such identities can normally be modified at a later stage if necessary. The registering of new nodes is typically done in a central unit, by means of a computer or other input means connected to the central unit or to the data bus.

In prior art, e.g. DE 101 50 499 and EP 1 289 190, there are configuring methods for automatic identification of new nodes. This is often referred to as plug-and-play solutions. Such methods automatically register new nodes being connected to the data bus and thereby associate them with a unique identity. Other types of automatic connection procedures are available for assisting when originally connecting a node to the data bus, e.g. EP 0 601 467, where bus termination is automatically controlled.

However, even after such plug-and-play-like procedures, there is no *a priori* knowledge within the system about which input nodes should control which output nodes, e.g. which button should start which motor. This is an example of a configuration of the system related to an actual use, typically comprising an association between one or several input nodes and one or several output nodes. A fully automatic plug-and-play association configuration is not possible, since there has to be additional input from the system builder about which nodes that should be associated with which. There are, however, several manual or semi-automatic methods in prior art for performing such association configurations. A typical approach is to use a computer connected to the central unit or the data bus in order to define or change certain registers in the central unit. Such registers are intended for associating certain input and output node identities.

### SUMMARY

A problem with node association configuration of prior art is that it typically involves the use of a computer and requires some knowledge about programming or register handling. Many users of simple data bus systems are very reluctant against use of programming tools and software handling of registers.

A general object of the present invention is to provide methods and devices for node association configuration of bus systems that do not rely on skills in programming or software interaction. A further object of the present invention is to provide such devices and methods enabling original association as well as re-association.

The objects above are achieved by methods and devices according to the enclosed patent claims. In general words, a bus system comprises a bus, a central unit and a number of input and output nodes. The system is arranged such that nodes changing their states, automatically report this to the central unit. The central unit is put into a particular node association mode. When being in the node association mode, the central unit detects two consecutive messages of state changes at connected nodes, and creates an association between the nodes. The association is thereby possible to create by deliberately changing the state of the nodes that is wanted to be associated.

The state changes together with the automatic messages to the central unit thereby mediate information from a user to the system on which the actual association is performed. The state change of the input node may occur either before or after the output node state change, or if the central unit has knowledge about the type of node, in any order. The central unit may be brought back to normal operation mode either automatically, or by an action by the operator. During subsequent operation, the central unit uses the achieved associations in order to forwarding a message from an input node to associated output nodes. In this way, one or several input nodes can be associated with one or several output nodes.

The devices and methods can be used also for changing an already existing association configuring, if previous associations are removed during configuration mode if a corresponding input and/or output node is marked for a new association.

One advantage with the present invention is that it provides possibilities for persons not being familiar with software interaction to configure their bus systems in an easy way. The approach may include some physical displacements between items associated with the nodes, but many people prefer such physical activity before computer handling.

### BRIEF DESCRIPTION OF THE DRAWINGS

The invention, together with further objects and advantages thereof, may best be understood by making reference to the following description taken together with the accompanying drawings, in which:
FIG. 1 is a schematic block diagram of an embodiment of a bus system;
FIG. 2 is a schematic block diagram of an embodiment of a central unit of a bus system according to the present invention;
FIGS. 3A-E are diagrams illustrating node and central unit actions and bus messages during embodiments of methods according to the present invention;
FIG. 4 is a diagram illustrating an example of an initial association configuring according to the present invention;
FIG. 5A is a flow diagram of main steps of an embodiment of a method according to the present invention; and
FIG. 5B is a flow diagram of main steps of another embodiment of a method according to the present invention.

### DETAILED DESCRIPTION

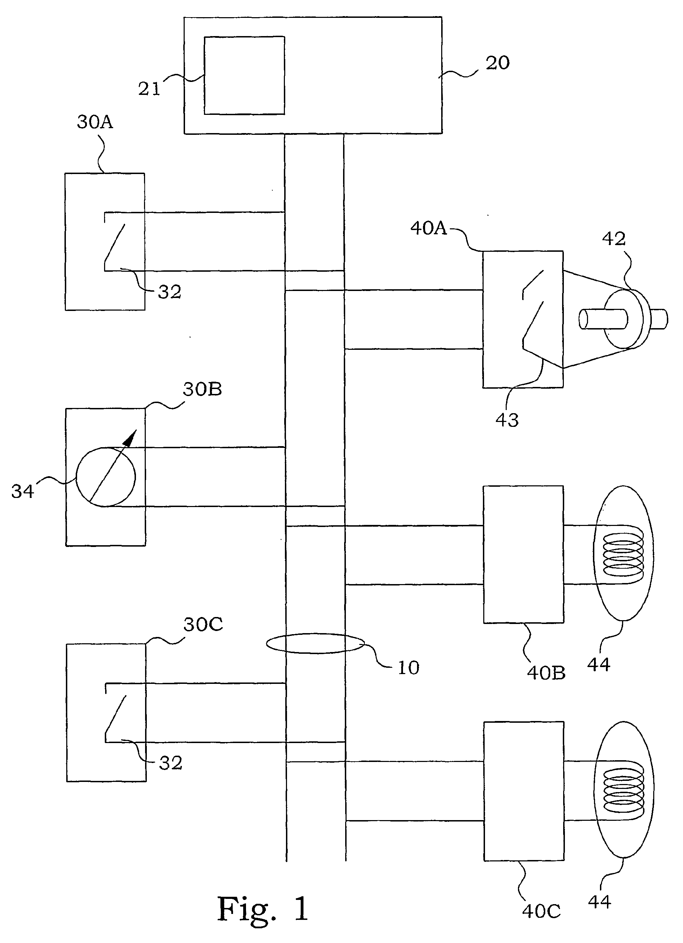

Fig. 1 illustrates a typical bus system 1, in which methods and devices according to the present invention can be applied. Such a bus system is typically present in systems using relatively low level of message handling, e.g. cars, consumer products or smaller boats. A data bus 10, typically a 2-wire bus is connected to a central unit 20. The central unit 20 controls the bus and the messaging activities thereon.

A number of nodes 30A-C, 40A-C are connected to the data bus 10. Some nodes are input nodes 30A-C, i.e. their normal operation consists of presenting some sort of input signals into the bus system 1, that are intended to cause further actions, e.g. at another node. Typical input nodes comprise switches 32 or regulators 34. By changing, typically manually, the state of such a node 30A-C, e.g. turning a switch 32 on or off or changing the settings of a regulator 34, a message is sent on the bus to the central unit 20 for informing about the changes.

Some nodes are output nodes 40A-C, i.e. their normal operation consists of receiving some sort of output signal or instruction from the bus system 1. The output signal is intended to control the output node 40A-C to perform some predefined actions. Typical output nodes comprise some kind of loads, e.g. motors 42 or light bulbs 44. As a response of received output signals, the output nodes 40A-C controls the load accordingly.

In order to distinguish between the different nodes connected to the data bus 10, each node is associated with an identity. The identity can typically be a number or string of characters. The central unit 20 typically comprises an identity register 21, in which identities of connected nodes are registered. Optionally, the identity register 21 comprises additional information about the nodes, e.g. type of node (input/output/other), communication capabilities, intended use etc. The identity is unique for every node. The identity can be assigned at the manufacturing or by an individual programming or setting of each node before or in connection with the electrical connection to the data bus 10. This is well known in prior art.

A bus system 1 according to the present invention has a number of input nodes 30A-C and a number of output nodes 40A-C. The nodes 30A-C, 40A-C are possible to influence from outside. A state of an input node 30A-C, typically having a switch 32 or regulator 34, can be influenced by simply manoeuvring the switch 32 or the regulator 34.

A state of an output node 40A-C can also be influenced from outside. The most trivial way is to connect or disconnect, respectively, the associated load to/from the node. The output node has in such a case to be arranged to sense if a load is connected or not. Such connection/disconnection can simply be performed by plugging or unplugging a connection into a socket. Another possible way to arrange for ability to influence the output node from outside is to provide a switch at the node, which is intended to mark a state of the node. In the present disclosure, such a switch is called a marker button. If the node has more than one directly connected load, one marker button per load is needed.

The input and output nodes are furthermore arranged in such a way that the node can detect the state of the node. Moreover, the node is arranged to create a message addressed to the central unit as a response of a change of a node state.

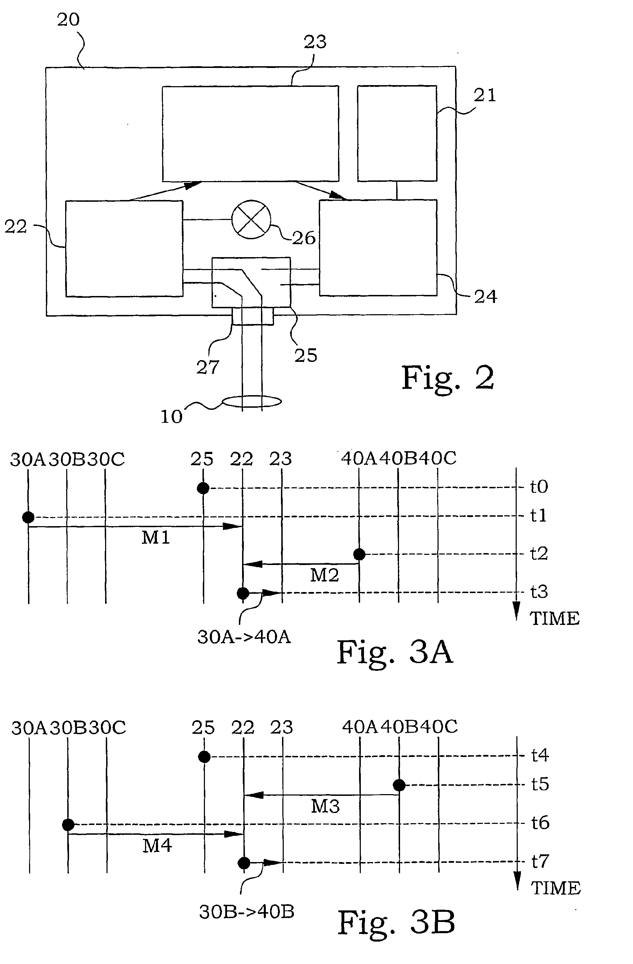

Fig. 2 illustrates an embodiment of a central unit 20 according to the present invention for managing of a bus system. The central unit 20 comprises as mentioned further above a register 21 comprising node identities. The central unit 20 also comprises a communication bus terminal 27, arranged for receiving and transmitting communication messages from/onto the data bus 10. The communication bus terminal 27 is connected to a switch 25, which is arranged to put the central unit 20 in a node association mode or in a normal operation mode. When the switch 25 is set for the node association mode, any messages received on the communication bus terminal 27 are connected to a node association means 22. The node association means 22 monitors any received messages for state changes. According to the present invention, the node association means 22 creates an association between a first and a second node consecutively informing the central unit 20 about a state change. Such a node association is stored in an association register 23. The association register 23 could be a separate register or merged with the register 21 comprising node identities.

In alternative embodiments, the association register 23 could be arranged in other manners. The association register 23 could e.g. be a distributed means, where at least one of each pair of associated input and output nodes has access to the association. For example, when the association is performed at the central unit 20, a notification of the association is distributed to at least one of the input and output node being associated. If it is assumed that the output node receives the notification, the output node arranges itself to consider all messages sent from the associated input node as being addressed to the output node in question. The association may be stored in a particular storage or may be represented by any configuration data of the node in question. Analogously, if the input node is notified, it can address all output messages (except for messages explicitly aimed for the central unit) directly to the associated output node. In such embodiments, the central unit 20 thus comprises means for notifying at least one of the input and output node about the association.

Returning to the embodiment of Fig. 2, the switch 25 acts as an association configuring button, which puts the central unit into the association configuring mode. The switch 25 is in this embodiment provided at the central unit 20, but may also be provided elsewhere in the system, and then preferably connected to the data bus for enabling communication thereby. It is furthermore preferred if the state of the switch 25 is indicated by an indicator 26, in the present embodiment a light emitting diode. A steady light could indicate the start of an association procedure, a flashing light could indicate that a first node state change has been detected and a dark indicator could indicate that the central unit 20 is in a normal operation mode.

The central unit 20 comprises association means, which in a normal operation mode operates by forwarding an input message from an input node as an output message to an output node being associated with the input node according to the association register 23. This is performed by an associating means 24 connected to the association register 23.

The association configuring procedure will be further explained by a few examples.

In Fig. 3A, node and central unit events as well as bus messages in an association configuring procedure are illustrated. At time t0, the configuring mode switch is pressed, putting the central unit 20 in an association configuring mode, i.e. alerting the node association means 22. At time t1, a switch in input node 30A is changed, resulting in that a message M 1 reporting this state change is sent on the data bus to the node association means 22 of the central unit 20. The state change of node 30A is typically made manually. At time t2, a load of output node 40A is connected, resulting in that a message M2 reporting this state change is sent on the data bus to the node association means 22 of the central unit 20. The node association means 22 of the central unit 20 has now received two consecutive messages, one from an input node and then one from an output node. In this embodiment, the node association means 22 of the central unit 20 is arranged to create an association between a first, input node and a second, output node sending the messages M 1 and M2, respectively. Such an association is in this particular embodiment stored at time t3 in the association register 23, to be used during normal operation mode. An input message from node 30A will from now on be forwarded to the output node 40A during normal operation.

In Fig. 3B, an embodiment where the order of the nodes is opposite is illustrated. At time t4 the configuring mode switch is pressed. At time t5, a load of output node 40B is connected, resulting in that a message M3 reporting this state change is sent on the data bus to central unit 20. At time t6, a switch in input node 30B is changed, resulting in that a message M4 reporting this state change is sent on the data bus to the central unit 20. The central unit 20 has now received two consecutive messages, one from an output node and then one from an input node. In this embodiment, the central unit 20 is arranged to create an association between a first, output node and a second, input node sending the messages M3 and M4, respectively. Such an association is stored at time t7 in the association register, to be used during normal operation mode. An input message from node 30B will be forwarded to the output node 40B.

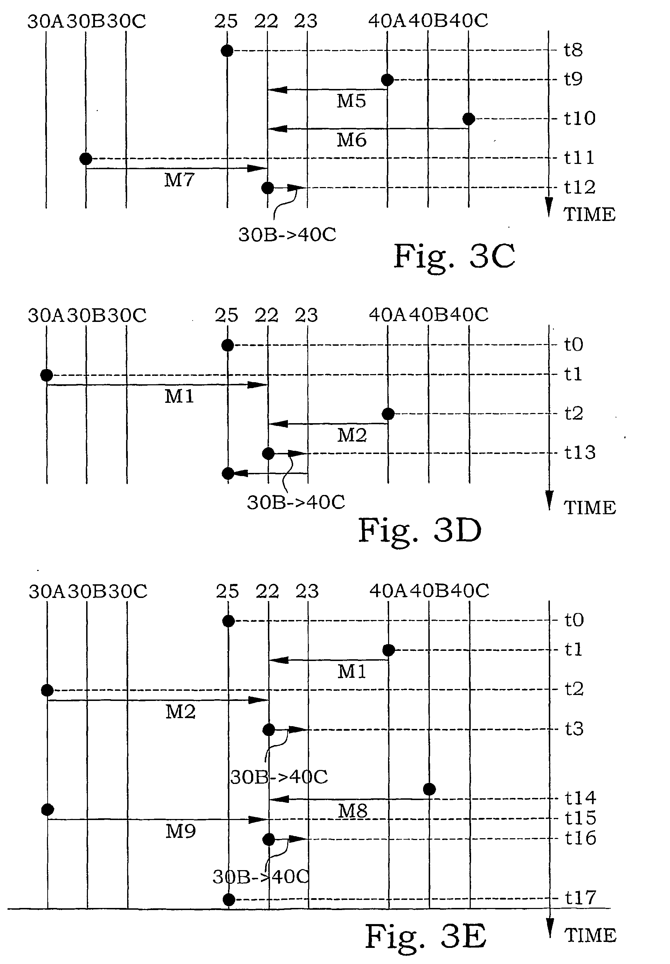

In Fig. 3C, an embodiment where the state changes of the nodes can be of either order is illustrated. At time t8 the configuring mode switch is pressed. At time t9, a load of output node 40A is connected, resulting in that a message M5 reporting this state change is sent on the data bus to central unit 20. At time t10, a load of another output node 40C is connected, resulting in that a message M6 reporting this state change is sent on the data bus to central unit 20. In this embodiment, the central unit 20 is arranged to consult the identity register 21 in order to determine if the two received messages are messages from different types of nodes or messages from the same type of node. In this case, the central unit 20 finds that both messages M5 and M6 are output node messages, and no association is made. However, at time t11, a switch in input node 30B is changed, resulting in that a message M7 reporting this state change is sent on the data bus to the central unit 20. The central unit 20 has now received two consecutive messages, one from an output node and then one from an input node. The central unit 20 is arranged to determine that the messages M6 and M7 are created by different kinds of nodes and creates an association between a first, output node and a second, input node sending the messages M6 and M7, respectively. Such an association is stored at time t12 in the association register, to be used during normal operation mode. An input message from node 30B will be forwarded to the output node 40C.

Fig. 3D illustrate one embodiment for ending the association configuring procedure. The events are initially identical to the events occurring in Fig. 3A. However, after the storage of the new association at time t3, the central unit 20 automatically returns to a normal operation mode at time t13. In this embodiment, only one association can be made for every time the configuring switch is switched.

Fig. 3E illustrates another embodiment for ending the association configuring procedure. The events are also here initially identical to the events occurring in Fig. 3A. However, after the storage of the new association at time t3, the central unit 20 instead remains in the association configuring mode. At times t14 and t15 further messages M8 and M9 are received, which results in an additional association, which is stored at t16. At time t17 the configuring mode switch is pressed once more, which ends the association configuring mode. As shown further below, such an ending allows for maintenance configuring.

One may differ between two types of association configuring. Initial association configuring is made when nodes are connected or used for the first time, typically when the bus system is taken into operation. Maintenance association configuring is instead performed, when an already existing association in the bus system is to be changed, or when a system module is to be replaced. Here below, illustrative examples of such configuring procedures are described.

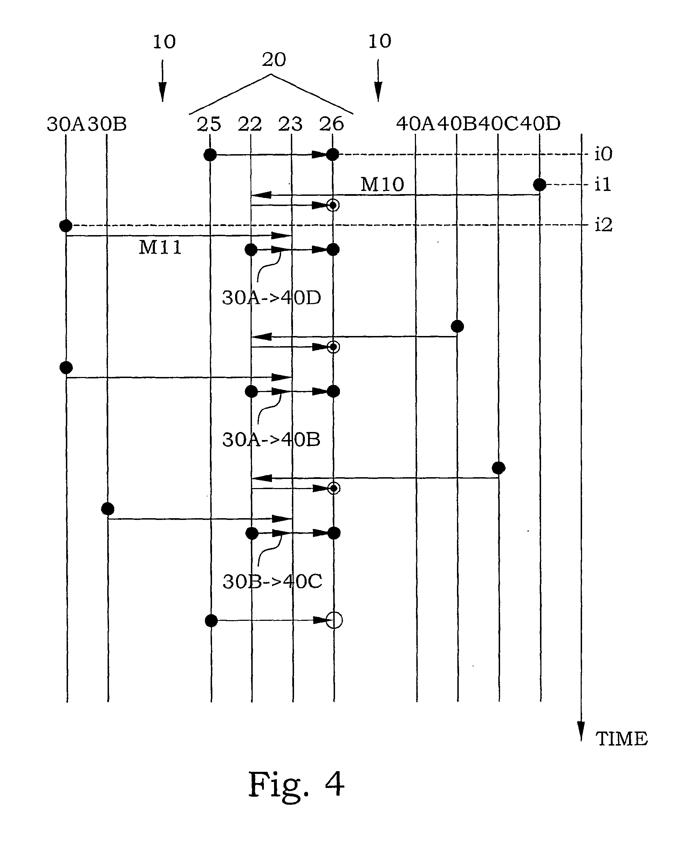

In Fig. 4A, an example of an initial association configuring procedure according to the present invention is described. First, all nodes are connected to the data bus and are registered in the identity register according to any prior art procedures. Assume that all input nodes have binary switches, i.e. switches having two states; on and off. The switches of the input nodes 30A-B are put in an off state. Assume further that all loads to be connected to output nodes 40A-D are not connected. The bus system is started and the system is put into association configuring mode by manually switching on the association configuring button 25 at time 10. Alternatively, the system may enter into the association configuring mode automatically when turned on for the very first time. Preferably, the indicator 26 is turned on with a steady light.

The load that is going to be configured is now manually connected to its output node 40D at time i1. (If the output node has a state switch, the switch can instead be switched.) A change of state is detected in the output node 40D and a message M10 about the state change is communicated via the data bus to the central unit 20. The central unit 20 now registers that a node with a certain unique identity has changed its state from "no load connected" to "load connected". The messaging can be performed in two different ways. Either, the central unit periodically requests data concerning the node state from all nodes. The central unit 20 then keeps track of the present state of each node and registers if a change is detected. Alternatively, the node itself initiates the messaging, when a state change is detected in the node. When a first state change is detected, the central unit 20 preferably changes the input to the indicator 26 to cause a twinkling light, marking that a first state change is detected.

The central unit now has identified a load that the operator wants to configure. The next step is to associate this load to a certain switch or button at an input node. This is performed by simply pressing the button or changing the switch position, in the present example at node 30A at time i2. Also this state change is detected by the central unit, either through a repetitive state enquiry or by actively being noticed M 11 by the node itself. The central unit now logically connects the identified switch 30A with the identified load 40D. This is performed in the present embodiment by storing an entrance in the association register. When the logical association is ready, the light diode is controlled to give a steady light again, indicating that a new association procedure can be initiated.

The association configuring can then be repeated any number of times. In Fig. 4, node 30A is again associated, now with the load of node 40B. Finally, node 30B is associated with node 40C.

When the entire initial association configuring is ready, the association configuring button 25 is pressed once again. The central unit returns to the normal operation mode and the indicator diode 26 is switched off.

If one wants to re-configure the system, a new maintenance association configuration can be performed. First a load to be configured is disconnected, preferably manually. The association configuring button 25 is pressed. The central unit 20 is thereby put into an association configuring mode. The central unit may now also register all states for all switches and loads according to any prior art procedures. The indicator 26 is controlled to be steadily lit. The load is connected again, preferably manually. The central unit registers the new state at the load in question. When the registering is ready, the indicator is given a twinkling light.

In a next step, the load is logically associated with a certain switch in a similar manner as for the initial association above. When this is ended, the indicator 26 is turned into a steady light again. The configuring procedure can when needed be repeated for further loads and switches, i.e. for output and input nodes.

According to an embodiment of the invention, several input nodes can be logically associated with the same output node. The association procedure is thereby repeated while always selecting the same load, but different switches.

According to another embodiment of the invention, several output nodes can be logically associated with the same input node. The association procedure is thereby repeated while always selecting the same switch, but different loads.

When performing a maintenance association configuring, the central unit can preferably be arranged to remove previous associations of those nodes that are configured during the ongoing maintenance session. In such a way, old, no longer valid associations may be removed.

Alternatively, the central unit can be put into two different association configuring modes. A first association configuring mode in which all previous associations regarding the participating nodes are removed, and a second association configuring mode in which all previous associations are preserved. Such alternative is useful if an automatic return into normal operation mode is provided.

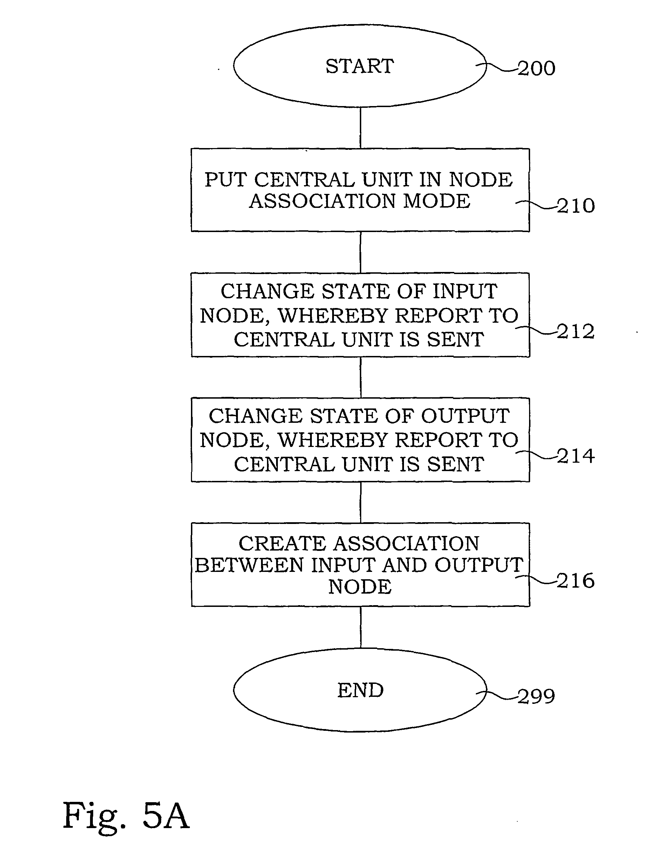

Fig. 5A illustrates a flow diagram of main steps of an embodiment of a method according to the present invention. The procedure starts in step 200. In step 210 a central unit is put into a node association configuring mode. In step 212 a state of an input node is changed, whereby the central unit is informed about that state change. In step 214 a state of an output node is changed, whereby the central unit is informed also about that state change. An association between the input node and the output node is created as a response to two consecutive informed state changes in step 216. The procedure is ended at step 299.

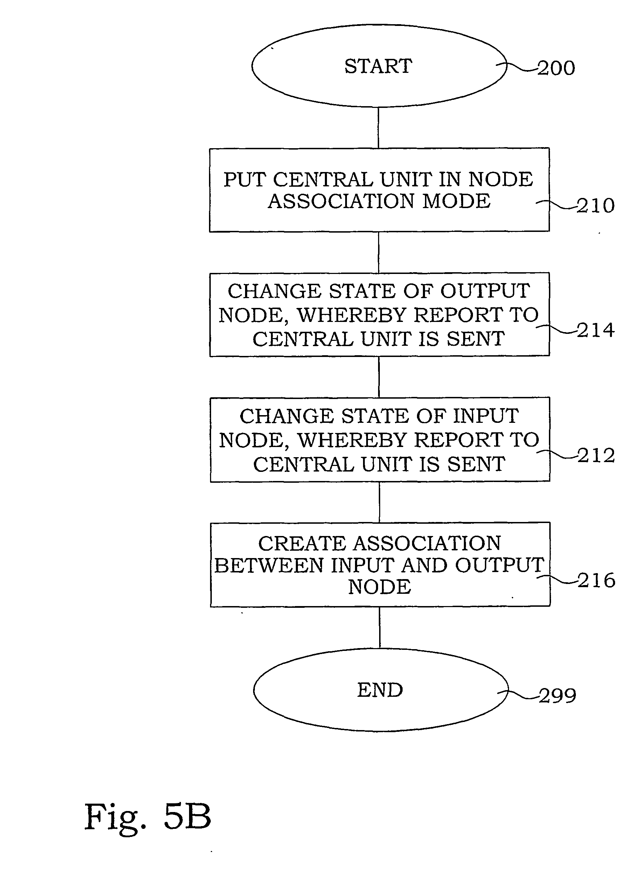

Fig. 5B illustrates a similar flow diagram. The difference compared with Fig. 5A is that state changes are performed in the opposite order.

The present invention describes a very simple method for configuring a bus system. The advantage with this method is that it does not require any computer or screen to be used. The identities of the nodes are furthermore not visible for the operator, which makes any identity redefinition unnecessary.

## Claims

1. Method for managing a bus system (1), having a central unit (20), a number of input nodes (30A-C) and a number of output nodes (40A-D), said input and output nodes being arranged to inform said central unit (20) about state changes, comprising the steps of:
putting (210) said central unit (20) in a node association mode;
changing (212) a state of an input node (30A-C), whereby said central unit (20) is informed about said state change;
changing (214) a state of an output node (40A-D), whereby said central unit (20) is informed about said state change;
creating (216), in said central unit (20), an association between said input node (30A-C) and said output node (40A-D) as a response to two consecutive informed state changes.

2. Method according to claim 1, wherein said step of changing a state of said input node (30A-C) is performed before said step of changing a state of said output node (40A-D).

3. Method according to claim 1, wherein said step of changing a state of said input node (30A-C) is performed after said step of changing a state of said output node (40A-D).

4. Method according to any of the claims 1 to 3, comprising the further step of storing said association in said central unit (20).

5. Method according to any of the claims 1 to 3, comprising the further step of storing said association information in at least one of said input node (30A-C) and said output node (40A-D).

6. Method according to any of the claims 1 to 5, comprising the further step of putting said central unit (20) in a normal operation mode.

7. Method according to claim 6, wherein said step of putting said central unit (20) in a normal operation mode is performed automatically responsive to said creating step (216).

8. Method according to claim 6, wherein said steps of changing (212) a state of an input node (30A-C), changing (214) a state of an output node (40A-D), and creating (216) an association are repeated before said step of putting said central unit (20) in a normal operation mode.

9. Method according to any of the claims 1 to 8, comprising the further step of forwarding, in said central unit (20) in normal operation mode, a message from said first input node (30A-C) to said first output node (40A-D).

10. Method according to any of the claims 1 to 9, wherein said step of changing (212) a state of a first input node (30A-C) comprises the step of manually changing a switch (32) on said first input node (30A-C).

11. Method according to any of the claims 1 to 10, wherein said step of changing (214) a state of a first output node (40A-D) comprises the step of manually changing a switch on said first output node (40A-D).

12. Method according to any of the claims 1 to 10, wherein said step of changing (214) a state of a first output node (40A-D) comprises the step of manually connecting/disconnecting a load (42, 44) to/from said first output node (40A-D).

13. Central unit (20) for managing of a bus system (1), comprising:
communication bus terminal (27) arranged for receiving and transmitting communication messages;
means (25) for putting said central unit (20) in a node association mode;
said central unit (20) being arranged, when being in said node association mode, to create an association between a first and a second node consecutively informing said central unit (20) about a state change.

14. Central unit according to claim 13, further comprising storage means (23) for storing information representing said association.

15. Central unit according to claim 13, further comprising means for causing storing of said association information in at least one of said input node (30A-C) and said output node (40A-D).

16. Central unit according to any of the claims 13 to 15, further comprising means (25) for putting said central unit (20) in a normal operation mode.

17. Central unit according to any of the claims 13 or 15, wherein said means (25) for putting said central unit (20) in a normal operation mode is automatically operated as a response to said association being performed.

18. Central unit according to any of the claims 13 to 17, further comprising forwarding means (24), arranged for forwarding a message from said first node to said second node using said association.

19. Bus system (1), comprising:
central unit (20) according to any of the claims 13 to 18;
communication bus (10) connected to said central unit (20);
a number of input nodes (30A-C) connected to said communication bus (10); and
a number of output nodes (40A-D) connected to said communication bus (10);
said input and output nodes (30A-C, 40A-D) being arranged to inform said central unit (20) about state changes;
whereby said number of input nodes (30A-C) comprises said first node and said number of output nodes (40A-D) comprises said second node.

20. Bus system according to claim 19, wherein said first node comprises a switch (32) for changing a state of said first node.

21. Bus system according to claim 19 or 20, wherein said second node comprises a switch for changing a state of said second node.

22. Bus system according to any of the claims 19 to 21, wherein a load (32, 34) is connected/disconnected to/from said second node for changing the state of said second node.

## Patentansprüche

1. Verfahren zum Managen eines Bussystems (1) mit einer Zentraleinheit (20), einer Anzahl von Eingangsknoten (30A-C) und einer Anzahl von Ausgangsknoten (40A-D), wobei die Eingangs- und Ausgangsknoten eingerichtet sind, um die Zentraleinheit (20) über Zustandsänderungen zu informieren, umfassend die Schritte:
Versetzen (210) der Zentraleinheit (20) in eine Knoten-Assoziations-Betriebsart;
Ändern (212) eines Zustandes eines Eingangsknotens (30A-C), wodurch die Zentraleinheit (20) über den Statuswechsel informiert wird;
Ändern (214) eines Zustandes eines Ausgangsknotens (40A-D), wodurch die Zentraleinheit (20) über den Zustandsänderung informiert wird;
Erzeugen (216) einer Beziehung zwischen dem Eingangsknoten (30A-C) und dem Ausgangsknoten (40A-D) in der Zentraleinheit (20) als eine Antwort auf zwei aufeinander folgende gemeldete Zustandsänderungen.

2. Verfahren nach Anspruch 1, worin der Schritt des Änderns eines Zustands des Eingangsknotens (30A-C) vor dem Schritt des Änderns des Zustands des Ausgangsknotens (40A-D) ausgeführt wird.

3. Verfahren nach Anspruch 1, worin der Schritt des Änderns des Zustands des Eingangsknotens (30A-C) nach dem Schritt des Änderns des Zustands des Ausgangsknotens (40A-D) ausgeführt wird.

4. Verfahren nach einem der Ansprüche 1 bis 3, umfassend den weiteren Schritt eines Speicherns der Beziehung in der Zentraleinheit (20).

5. Verfahren nach einem der Ansprüche 1 bis 3, umfassend den weiteren Schritt eines Speicherns der Beziehungsinformation in mindestens einem von den Eingangsknoten (30A-C) und den Ausgangsknoten (40A-D).

6. Verfahren nach einem der Ansprüche 1 bis 5, umfassend den weiteren Schritt eines Versetzens der Zentraleinheit (20) in eine normale Betriebsart.

7. Verfahren nach Anspruch 6, worin der Schritt des Versetzens der Zentraleinheit (20) in eine normale Betriebsart automatisch reagierend auf den Erzeugungsschritt (216) ausgeführt wird.

8. Verfahren nach Anspruch 6, worin die Schritte des Änderns (212) eines Zustands eines Eingangsknotens (30A-C), Änderns (214) eines Zustands eines Ausgangsknotens (40A-D) und Erzeugens (216) einer Beziehung vor dem Schritt des Versetzens der Zentraleinheit (20) in eine normale Betriebsart wiederholt werden.

9. Verfahren nach einem der Ansprüche 1 bis 8, umfassend den weiteren Schritt eines Weiterleitens einer Nachricht von dem ersten Eingangsknoten (30A-C) zu dem ersten Ausgangsknoten (40A-D), wobei die Zentraleinheit (20) in normaler Betriebsart ist.

10. Verfahren nach einem der Ansprüche 1 bis 9, worin der Schritt des Änderns (212) eines Zustands eines ersten Eingangsknotens (30A-C) den Schritt eines manuellen Änderns eines Schalters (32) auf dem ersten Eingangsknoten (30A-C) umfasst.

11. Verfahren nach einem der Ansprüche 1 bis 10, worin der Schritt des Wechselns (214) eines Zustands eines ersten Ausgangsknotens (40A-D) den Schritt eines manuellen Änderns eines Schalters an dem ersten Ausgangsknoten (40A-D) umfasst.

12. Verfahren nach einem der Ansprüche 1 bis 10, worin der Schritt des Änderns (214) eines Zustands eines ersten Ausgangsknotens (40A-D) den Schritt eines manuellen Verbindens/Trennens einer Last (42, 44) an/von dem ersten Ausgangsknoten (40A-D) umfasst.

13. Zentraleinheit (20) zum Managen eines Bussystems (1) umfassend:
eine Kommunikationsbus-Anschlusseinheit (27) eingerichtet für das Empfangen und Senden von Kommunikationsnachrichten;
Mittel (25) zum Versetzen der Zentraleinheit (20) in eine Knoten-Assoziations-Betriebsart;
wobei die Zentraleinheit, wenn diese in der Knoten-Assoziations-Betriebsart ist, eingerichtet ist, um eine Beziehung zwischen einem ersten und einem zweiten Knoten zu schaffen, die aufeinanderfolgend die Zentraleinheit (20) über Zustandsänderungen informiert.

14. Zentraleinheit nach Anspruch 13, weiterhin umfassend Speichermittel (23) zum Speichern von die Beziehung darstellenden Informationen.

15. Zentraleinheit nach Anspruch 13, weiterhin umfassend Mittel zum Bewirken eines Speicherns der Beziehungsinformation in mindestens einem von den Eingangsknoten (30A-C) und den Ausgangsknoten (40A-D).

16. Zentraleinheit nach einem der Ansprüche 13 bis 15, weiterhin umfassend Mittel (25) zum Versetzen der Zentraleinheit (20) in eine normale Betriebsart.

17. Zentraleinheit nach einem der Ansprüche 13 oder 15, worin die Mittel (25) zum Versetzen der Zentraleinheit (20) in eine normale Betriebsart als eine Antwort auf die ausgeführte Beziehung automatisch betätigt werden.

18. Zentraleinheit nach einem der Ansprüche 13 bis 17, weiterhin umfassend Weiterleitungsmittel (24), die zum Weiterleiten einer Nachricht von dem ersten Knoten zu dem zweiten Knoten eingerichtet sind unter Verwendung der Beziehung.

19. Bussystem (1) umfassend:
eine Zentraleinheit (20) nach einem der Ansprüche 13 bis 18;
einen mit der Zentraleinheit (20) verbundenen Kommunikationsbus (10);
eine Anzahl von mit dem Kommunikationsbus (10) verbundenen Eingangsknoten (30A-C) und
eine Anzahl von mit dem Kommunikationsbus (10) verbundenen Ausgangsknoten (40A-D);
wobei die Eingangs- und Ausgangsknoten (30A-C, 40A-D) eingerichtet sind, um die Zentraleinheit (20) über Statusänderungen zu informieren;
wobei die Anzahl der Eingangsknoten (30A-C) einen ersten Knoten umfasst und die Anzahl der Ausgangsknoten (40A-D) einen zweiten Knoten umfasst.

20. Bussystem nach Anspruch 19, worin der erste Knoten einen Schalter (32) zum Ändern des Zustands des ersten Knotens umfasst.

21. Bussystem nach Anspruch 19 oder 20, worin der zweite Knoten einen Schalter zum Ändern des Zustands des zweiten Knotens umfasst.

22. Bussystem nach einem der Ansprüche 19 bis 21, worin eine Last (32, 34) mit/von dem zweiten Knoten zum Ändern des Zustands des zweiten Knotens verbunden/getrennt wird.

## Revendications

1. Procédé pour gérer un système de bus (1) comprenant une unité centrale (20), une pluralité de noeuds d'entrée (30A-C) et une pluralité de noeuds de sortie (40A-D), lesdits noeuds d'entrée et de sortie étant configurés de telle manière à informer ladite unité centrale (20) concernant des changements d'état, comportant les étapes suivantes :
placer (210) ladite unité centrale (20) dans un mode d'association de noeuds;
changer (212) un état d'un noeud d'entrée (30A-C), de telle manière que ladite unité centrale (20) soit informée dudit changement d'état ;
changer (214) un état d'un noeud de sortie (40A-D), de telle manière que ladite unité centrale (20) soit informée dudit changement d'état ;
créer (216), dans ladite unité centrale (20), une association entre ledit noeud d'entrée (30A-C) et ledit noeud de sortie (40A-D) en réponse à deux changements d'état consécutifs signalés.

2. Procédé selon la revendication 1, dans lequel ladite étape de changement d'un état dudit noeud d'entrée (30A-C) est effectuée avant ladite étape de changement d'un état dudit noeud de sortie (40A-D).

3. Procédé selon la revendication 1, dans lequel ladite étape de changement d'un état dudit noeud d'entrée (30A-C) est effectuée après ladite étape de changement d'un état dudit noeud de sortie (40A-D).

4. Procédé selon l'une quelconque des revendications 1 à 3, comprenant l'étape additionnelle consistant à stocker ladite association dans ladite unité centrale (20).

5. Procédé selon l'une quelconque des revendications 1 à 3, comprenant l'étape additionnelle consistant à stocker lesdites informations d'association dans au moins un desdits noeuds d'entrée (30A-C) et desdits noeuds de sortie (40A-D).

6. Procédé selon l'une quelconque des revendications 1 à 5, comprenant l'étape additionnelle consistant à placer ladite unité centrale (20) dans un mode de fonctionnement normal.

7. Procédé selon la revendications 6, dans lequel ladite étape consistant à placer ladite unité centrale (20) dans un mode de fonctionnement normal est effectuée automatiquement en réponse à ladite étape de création (216).

8. Procédé selon la revendications 6, dans lequel lesdites étapes consistant à changer (212) un état d'un noeud d'entrée (30A-C), à changer (214) un état d'un noeud de sortie (40A-D), et à créer (216) une association sont répétées avant ladite étape consistant à placer ladite unité centrale (20) dans un mode de fonctionnement normal.

9. Procédé selon l'une quelconque des revendications 1 à 8, comprenant l'étape additionnelle consistant à transmettre, dans ladite unité centrale (20) en mode de fonctionnement normal, un message dudit premier noeud d'entrée (30A-C) audit premier noeud de sortie (40A-D).

10. Procédé selon l'une quelconque des revendications 1 à 9, dans lequel ladite étape consistant à changer (212) un état d'un premier noeud d'entrée (30A-C) comprend l'étape consistant à changer manuellement la position d'un commutateur (32) sur ledit premier noeud d'entrée (30A-C).

11. Procédé selon l'une quelconque des revendications 1 à 10, dans lequel ladite étape consistant à changer (214) un état d'un premier noeud de sortie (40A-D) comprend l'étape consistant à changer manuellement la position d'un commutateur sur ledit premier noeud de sortie (40A-D).

12. Procédé selon l'une quelconque des revendications 1 à 10, dans lequel ladite étape consistant à changer (214) un état d'un premier noeud de sortie (40A-D) comprend l'étape consistant à connecte / déconnecter manuellement une charge (42, 44) audit / dudit premier noeud de sortie (40A-D).

13. Unité centrale (20) pour gérer un système de bus (1), comprenant :
un élément de terminaison de bus de communication (27) configuré de telle manière à recevoir et à transmettre des messages de communication ;
des moyens (25) permettant de placer ladite unité centrale (20) dans un mode d'association de noeuds;
ladite unité centrale (20) étant configurée, lorsqu'elle est dans ledit mode d'association de noeuds, de telle manière à créer une association entre un premier et un second noeud informant de manière consécutive ladite unité centrale (20) concernant un changement d'état.

14. Unité centrale selon la revendication 13, comprenant en outre des moyens (23) pour stocker des informations représentant ladite association.

15. Unité centrale selon la revendication 13, comprenant en outre des moyens entraînant le stockage desdites informations d'association dans au moins un desdits noeuds d'entrée (30A-C) et desdits noeuds de sortie (40A-D).

16. Unité centrale selon l'une quelconque des revendications 13 à 15, comprenant en outre des moyens (25) prévus pour placer ladite unité centrale (20) dans un mode de fonctionnement normal.

17. Unité centrale selon l'une quelconque des revendications 13 à 15, dans laquelle lesdits moyens (25) prévus pour placer ladite unité centrale (20) dans un mode de fonctionnement normal sont actionnés automatiquement en réponse à ladite association en cours d'établissement.

18. Unité centrale selon l'une quelconque des revendications 13 à 17, comprenant en outre des moyens de transmission (24), prévus pour transmettre un message dudit premier noeud audit second noeud au moyen de ladite association.

19. Système de bus (1), comprenant :
une unité centrale (20) selon l'une quelconque des revendications 13 à 18 ;
un bus de communication (10) relié à ladite unité centrale (20) ;
une pluralité de noeuds d'entrée (30A-C) reliés audit bus de communication (10) ; et
une pluralité de noeuds de sortie (40A-D) reliés audit bus de communication (10) ;
lesdits noeuds d'entrée et de sortie (30A-C, 40A-D) étant configurés de telle manière à informer ladite unité centrale (20) concernant des changements d'état ;
de sorte que ladite pluralité de noeuds d'entrée (30A-C) comprend ledit premier noeud et ladite pluralité de noeuds de sortie (40A-D) comprend ledit second noeud.

20. Système de bus selon la revendication 19, dans lequel ledit premier noeud comprend un commutateur (32) pour changer un état dudit premier noeud.

21. Système de bus selon la revendication 19 ou 20, dans lequel ledit second noeud comprend un commutateur pour changer un état dudit second noeud.

22. Système de bus selon l'une quelconque des revendications 19 à 21, dans lequel une charge (32, 34) est connectée / déconnectée audit / dudit second noeud pour changer l'état dudit second noeud.
